# EUROPÄISCHE PATENTSCHRIFT

(11) **EP 4 434 413 B1**
(45) Veröffentlichungstag und Bekanntmachung des Hinweises auf die Patenterteilung: **27.05.2026**
(21) Anmeldenummer: 24162021.0
(22) Anmeldetag: 07.03.2024
(51) Int. Cl.: A47J 31/44

(54) **GETRÄNKEZUBEREITUNGSVORRICHTUNG, INSBESONDERE KAFFEEVOLLAUTOMAT, MIT EINEM MEMBRAN-SCHAUMMODUL**
BEVERAGE PREPARATION DEVICE, IN PARTICULAR FULLY AUTOMATIC COFFEE MAKER, HAVING A MEMBRANE FOAM MODULE
DISPOSITIF DE PRÉPARATION DE BOISSONS, EN PARTICULIER MACHINE À CAFÉ ENTIÈREMENT AUTOMATIQUE, DOTÉ D'UN MODULE DE MOUSSE À MEMBRANE

(30) Priorität: 20.03.2023 DE 102023106900
(43) Veröffentlichungstag der Anmeldung: 25.09.2024
(60) Teilanmeldung: 26167894.0
(73) Patentinhaber: Eugster/Frismag AG, 8580 Amriswil (CH)
(72) Erfinder: Wäger, Simon, 8580 Amriswil (CH); Frei, Nicolas, 9320 Arbon (CH); Sonderegger, Remo, 8274 Tägerwilen (CH); Stutz, Dieter, 9565 Bussnang (CH)
(74) Vertreter: Patent- und Rechtsanwälte Behrmann Wagner PartG mbB

(56) Entgegenhaltungen:
- EP-A2- 2 036 472
- EP-B1- 1 639 925
- DE-A1- 102007 024 443

## Beschreibung

Die vorliegende Erfindung betrifft eine Getränkezubereitungsvorrichtung, insbesondere einen Kaffeevollautomaten, nach dem Oberbegriff des Anspruchs 1.

Aus dem Stand der Technik sind Getränkezubereitungsvorrichtungen, insbesondere Kaffeevollautomaten, bekannt, die in der Lage sind, ein Getränkesubstrat, beispielsweise Kaffeebohnenmehl, zu bevorraten und/oder herzustellen, beispielsweise durch Zermahlen von Kaffeebohnen, um unter Verwendung von Fluiden, insbesondere Wasser, aus dem Getränkesubstrat ein Getränk aufzubrühen oder auszulaugen und auszugeben. Dabei sind die bekannten Getränkezubereitungsvorrichtungen dazu eingerichtet, unterschiedliche Getränke herzustellen und auszugeben. Die unterschiedlichen Getränke können unter anderem über verschiedene Parameter, beispielsweise Menge an Getränkesubstrat, Druck einer Vorverdichtung des Getränkesubstrats in einer Brühkammer, Brühkammerinnendruck beim Brühvorgang, Volumen an Brühfluid, Flussrate des Brühfluids, Temperatur des Brühfluids, Partikelgrößenverteilung (Mahlgrad) des Getränkesubstrats beeinflusst werden. Dadurch erhält der Bediener oder Benutzer einer entsprechenden Getränkezubereitungsvorrichtung die Möglichkeit, verschiedene und ggf. nach Bedienervorlieben personalisierte Getränke herzustellen und ausgeben zu lassen.

Bei bekannten Getränkezubereitungsvorrichtungen ist es zudem bereits hinlänglich bekannt, ein Schaummodul vorzusehen, um die hergestellten und ausgegebenen Getränke mit einem aufgeschäumten, bevorzugt proteinhaltigen Fluid, insbesondere Milch oder Milchersatz, zu ergänzen oder zu verfeinern. Die bekannten, in Getränkezubereitungsvorrichtungen, insbesondere Kaffeevollautomaten, integrierten Schaummodule arbeiten in der Regel auf dem Prinzip einer Venturi-Düse oder einer Strahlpumpe, bei denen über ein Treibmedium, beispielsweise heißes Wasser oder Dampf, das aufzuschäumende, bevorzugt proteinhaltige Fluid, angesaugt, aufgeschäumt und ebenfalls durch einen Fluidauslass ausgegeben wird, um, bevorzugt extern zu den Getränkezubereitungsvorrichtungen, einem Getränkebehälter zugeführt zu werden. Das Treibmedium wird dabei regelmäßig auch als Wärmeträger genutzt, um das aufzuschäumende Fluid zu erwärmen.

Im Stand der Technik sind bereits unterschiedliche Ausgestaltungen von Schaummodulen bekannt. Beispielsweise sind einfache Venturi-Düsen und mehrere Venturi-Düsen - sowohl in Reihe geschaltet als auch parallel geschaltet - bekannt. Durch die unterschiedlichen Ausgestaltungen soll in möglichst vielfältiger Hinsicht auf den jeweils erzeugten Schaum eingewirkt werden, um sowohl im Hinblick auf Temperatur, Luftgehalt, Konsistenz, Sämigkeit und dergleichen unterschiedliche Schäume zur Verfügung stellen zu können, um damit die Bandbreite der mit der Getränkezubereitungsvorrichtung hergestellten und ausgegebenen Getränke weiter zu erhöhen.

Neben dem Einsatz von Venturi-Düsen offenbart die DE 10 2007 024 443 A1 ein Verfahren zum Milchschäumen und eine dazugehörige Vorrichtung. Eine poröse Membran, die in der Druckschrift als Stromteiler bezeichnet wird, wird mit Druckluft beaufschlagt, um beim Austreten der Druckluft aus dem Stromteiler Milch in einer Milchkammer aufzuschäumen und somit Milchschaum zu generieren. In einer Ausführungsform ist eine Milchschaumdüse offenbart, welche einen Milcheingang und einen Lufteingang umfasst. Die Luft oder Druckluft strömt dabei von innen nach außen durch den Stromteiler und schäumt beim Austritt aus dem Stromteiler die Milch, welche am Außenumfang des Stromteilers entlang strömt, auf

Die EP 2 036 472 A2 offenbart eine Vorrichtung zum Erzeugen von Milchschaum, wobei in der Vorrichtung ein poröser Körper als ein Mischelement vorgesehen ist. Dabei wird Milch, die gegebenenfalls zunächst erwärmt wird, in einen Hauptkanal gegeben, wobei in den Hauptkanal eine Vielzahl von Luftkanälen des porösen Körpers münden. Der poröse Körper wird mit Druckluft durchströmt, sodass die Druckluft im Zentralkanal mündet und dort über eine Vielzahl von Fluidströmen in die Milch eingebracht wird, wodurch die Milch aufgeschäumt wird.

Weiterhin zeigt die EP 1 639 925 B1 eine Milchschäumvorrichtung mit einer Schäumkammer zum Aufschäumen von Milch mit Dampf. Dabei soll auf eine Beimischung von Luft in das Milch-Dampf-Gemisch verzichtet werden.

Bei den bisher bekannten Schaummodulen sind insbesondere im Hinblick auf die Temperatur des Schaums, die Konsistenz des Schaums und den Luftgehalt bestimmte Grenzen gesetzt.

Dementsprechend ist es die Aufgabe der vorliegenden Erfindung, eine Getränkezubereitungsvorrichtung mit einem Schaummodul anzugeben, welches die Nachteile im Stand der Technik überwindet und insbesondere eine größere Bandbreite, besonders im Hinblick auf Temperatur, Luftgehalt und Konsistenz des Schaums, bereitzustellen.

Diese Aufgabe wird mit einer Getränkezubereitungsvorrichtung mit den Merkmalen des Anspruchs 1 gelöst.

Vorteilhafte Ausführungsformen der Erfindung sind Gegenstand der nachfolgenden Beschreibung, Figurenbeschreibung, der Figuren sowie der Unteransprüche.

Insgesamt sollen alle nachfolgend vorrichtungsmäßig offenbarten Merkmale auch als entsprechend verfahrensmäßig offenbart und beanspruchbar gelten, und umgekehrt.

Die Getränkezubereitungsvorrichtung, insbesondere der Kaffeevollautomat, umfasst ein Schaummodul mit einer bevorzugt porösen Membran, wobei der Membran ein Fluidanschluss, der eine Verbindung zu einer Fluidpumpe, insbesondere Luftpumpe, herstellt, so wirkverbunden zugeordnet ist, dass ein Fluid, insbesondere Druckluft, die Membran von einer ersten Membranoberfläche zu einer zweiten Membranoberfläche passieren kann, wobei die Membraneinheit in einer Fluidkammer des Schaummoduls angeordnet ist, die einen Fluideinlass und einen Fluidauslass aufweist, wobei der Fluideinlass und der Fluidauslass so zu der Membran angeordnet sind, dass ein durch die Fluidkammer strömendes Fluid oder ein durch die Fluidkammer gepumptes Fluid eine zweite Membranoberfläche der Membran passiert, wobei der Fluideinlass mit einer Fluidkoppelstelle der Getränkezubereitungsvorrichtung verbindbar ist und wobei die Fluidkoppelstelle mit wenigstens einer Fluidzuleitung, bevorzugt zwei unabhängigen Fluidzuleitungen, verbunden ist.

Durch die Verwendung einer, bevorzugt porösen, Membran im Schaummodul, durch die Fluid, insbesondere Luft, gefördert werden kann und auf der Außenfläche der Membran in der Form von Luftblasen in das zwischen dem Fluideinlass und dem Fluidauslass transportierten Fluid, bevorzugt einem proteinhaltigen Fluid, wie beispielsweise Milch, aufgenommen werden kann, kann ein Schaum hergestellt und auf Seiten des Fluidauslasses ausgegeben werden, der ein deutlich größeres Spektrum an Eigenschaften abdeckt. So ist beispielsweise bei der zur Zurverfügungstellung von kaltem Fluid auf Seiten des Fluideinlasses und bei Durchströmen der Membran mit Fluid, bevorzugt Luft, bei Raumtemperatur, die Herstellung von kaltem Schaum, insbesondere Schaum zwischen 4°C und 20°C, möglich. Durch die Auswahl der Membran, insbesondere durch die Gestaltung der Porosität der Membran und die Steuerung des durch den Fluidanschluss und durch die Membran geförderten Fluids, insbesondere Luft, kann zudem eine besonders große Vielfalt an unterschiedlichen Konsistenzen des Schaums bereitgestellt werden.

Sofern an dem Fluideinlass über die Fluidkoppelstelle auch erwärmtes Fluid, entweder durch eine separate Fluidleitung, beispielsweise eine Dampfleitung, oder über einen entsprechenden Wärmetauschermechanismus bereitgestellt wird, kann zudem auch die Temperatur des erzeugten und ausgegebenen Schaums in einem sehr breiten Spektrum variiert werden. Darüber hinaus bestehen auch über die jeweils dynamische Steuerung des die Membran passierenden Fluids - bevorzugt Luft oder Druckluft - sowie durch die dynamische Steuerung des vom Fluideinlass zum Fluidauslass die zweite Membranoberfläche der Membran passierenden Fluids, insbesondere im Hinblick auf die Flussrate, weitere Möglichkeiten, die Schaumeigenschaften und Charakteristika des erzeugten und ausgegebenen Schaums in einem weiten Bereich zu variieren.

Auch nachfolgend im Rahmen der vorteilhaften Ausgestaltung wird noch auf weitere Möglichkeiten hingewiesen werden, durch die die Eigenschaften des hergestellten Schaums beeinflussbar sind. Dementsprechend wird mit der vorliegenden Erfindung ein grundlegendes Konzept für die Bereitstellung von sehr variablem Schaum mittels eines Schaummoduls einer Getränkezubereitungsvorrichtung, insbesondere eines Kaffeevollautomaten, bereitgestellt.

In einer ersten, vollteilhaften Ausführungsform der Erfindung kann vorgesehen sein, dass die Membran, insbesondere über eine Steckverbindung, werkzeuglos mit dem Fluidanschluss verbindbar und vom Fluidanschluss trennbar ausgebildet ist. Die aufgeschäumten, bevorzugt proteinhaltigen Fluide, wie beispielsweise Milch oder pflanzliche Milchersatzstoffe, neigen dazu, insbesondere wenn eine Erwärmung stattfindet, hartnäckige Ablagerungen und/oder Verkrustungen auszubilden. Die Funktionsfähigkeit des vorliegenden Milchmoduls hängt auch davon ab, dass ausreichend viel Fluid, insbesondere Luft, durch die Membran strömt und auf der zweiten Membranoberfläche der Membran in Form von Blasen, insbesondere Gasblasen, in das aufzuschäumende Fluid aufgenommen werden. Wenn durch Ablagerungen des aufzuschäumenden Fluids die Durchlässigkeit der Membran beeinträchtigt wird, kann dementsprechend die Funktionalität des Milchmoduls nicht dauerhaft aufrechterhalten werden. Dementsprechend ist es besonders vorteilhaft, wenn die Membran über eine werkzeuglos herstellbare und auflösbare Verbindung, wie beispielsweise eine Steckverbindung, mit dem Fluidanschluss gekoppelt und von diesem getrennt werden kann. Dabei kann vorgesehen sein, dass zwischen der Membran oder einer, wie unten noch eingehender definierten, Membraneinheit und dem Fluidanschluss Dichtmittel angeordnet sind, um nach dem Herstellen der Steckverbindung zwischen Fluidanschluss und Membran eine abgedichtete Fluidleitung gewährleisten zu können. Die Dichtmittel, beispielsweise in Form eines elastischen O-Rings, können dabei im Wesentlichen auch die mechanischen Haltekräfte der Steckverbindung durch ein Anpressen an die Membran oder Membraneinheit und ein Anpressen an den Fluidanschluss, insbesondere auf einer ersten Membranoberfläche, bereitstellen. Auch im Hinblick auf andere, nachfolgend noch beschriebene Steckverbindungen kann die Abdichtung und die dadurch bewirkte Klemmkraft realisiert sein.

Alternativ oder zusätzlich können zur Herstellung der Verbindung, insbesondere der Steckverbindung, auch mechanische Rastelemente, Bajonettelemente oder sonstige Sicherungselemente vorgesehen sein, um eine werkzeuglos trennbare und herstellbare Verbindung zwischen Membran und Fluidanschluss herzustellen. Auch dies kann bei anderen Steckverbindungen der vorliegenden Offenbarung so der Fall sein.

In einer weiteren, vorteilhaften Ausgestaltung der Getränkezubereitungsvorrichtung kann vorgesehen sein, dass die Fluidkammer, insbesondere über eine Steckverbindung, werkzeuglos mit der Fluidkoppelstelle der Getränkezubereitungsvorrichtung verbindbar und von der Fluidkoppelstelle der Getränkezubereitungsvorrichtung trennbar ausgebildet ist. Wie oben bereits ausgeführt, kann die Bildung von Ablagerungen die Funktionalität des Schaummoduls beeinträchtigen. Deshalb ist es besonders vorteilhaft, wenn auch die Fluidkammer, insbesondere zu Reinigungszwecken, einfach und ohne großen Aufwand von der Getränkezubereitungsvorrichtung, insbesondere der Fluidkoppelstelle, lösbar ausgebildet ist.

Besonders bevorzugt kann die Verbindung zwischen der Fluidkammer und der Fluidkoppelstelle sowie die Verbindung zwischen der Membran und dem Fluidanschluss so ausgebildet sein, dass eine einzelne oder einheitliche Bewegung beide Verbindungen trennt oder herstellt. Bezüglich der grundsätzlichen Natur der Verbindung zwischen der Fluidkammer und der Fluidkoppelstelle sei auf die vorangehenden Ausführungen bezüglich der Verbindung der Membran und dem Fluidanschluss verwiesen.

In einer weiteren, besonders bevorzugten Ausgestaltung kann vorgesehen sein, dass die Fluidkammer in einem mit einem abnehmbaren Verschluss versehenen Gehäuse angeordnet ist, wobei das Gehäuse und die Fluidkammer so ausgebildet sind, dass bei abgenommenem Verschluss die Membran aus der Fluidkammer und dem Gehäuse, bevorzugt werkzeuglos, entnehmbar ist. Damit kann das Gehäuse samt dem abnehmbaren Verschluss verschiedene vorteilhafte Funktionen erfüllen. Einerseits kann das Gehäuse dazu dienen, die Fluidkammer aufzunehmen. Ferner kann das Gehäuse zur Befestigung und Sicherung der Membran, insbesondere im Benutzungszustand oder im Bedienzustand, dienen. Ferner kann das Gehäuse über den abnehmbaren Verschluss den Zugang zur Membran und die Entnehmbarkeit der Membran gewährleisten. Besonders bevorzugt kann der abnehmbare Verschluss bodenseitig das Gehäuse abschließen. Weiterhin kann besonders bevorzugt vorgesehen sein, dass in dem abnehmbaren Verschluss der Fluidausgang der Fluidkammer mündet und der abnehmbare Verschluss eine Durchtrittsöffnung für aus dem Fluidauslass der Fluidkammer austretendem, aufgeschäumtem Fluid aufweist. Der abnehmbare Verschluss kann beispielsweise über ein Schraubgewinde mit der Fluidkammer und/oder dem Gehäuse verschraubt sein, die dann ein entsprechen komplementäres Gewinde aufweisen können. Besonders bevorzugt kann der abnehmbare Verschluss auf einer Außenoberfläche eine Profilierung aufweisen, die das Öffnen und Schließen des Verschlusses, insbesondere über ein Schraubgewinde, händisch und damit werkzeuglos ermöglicht oder erleichtert.

Besonders bevorzugt kann das Gehäuse mit dem abnehmbaren Verschluss in Zusammenwirken mit der Fluidkammer und der Membran bevorzugt ein entnehmbares Membranmodul ausbilden, welches bevorzugt über zwei gleichzeitig oder mit einer gemeinsamen Bewegung betätigbare Steckverbindungen mit der sonstigen Getränkezubereitungsvorrichtung verbunden oder von dieser getrennt werden kann, wobei das Membranmodul nach Entfernen des abnehmbaren Verschlusses weiter in seine Einzelteile zerlegt werden kann und insbesondere nach Entfernen des abnehmbaren Verschlusses neben der Vereinzelung des Verschlusses selbst, die Entfernung oder Entnahme der Membran aus dem Gehäuse und der Fluidkammer sowie ferner auch die Entfernung der Fluidkammer aus dem Gehäuse erreicht werden kann. Besonders bevorzugt können, wie vorangehend bereits ausgeführt, die entsprechenden Montage- und Demontageschritte werkzeuglos ausgeführt werden.

Der abnehmbare Verschluss kann weiter so ausgebildet sein, dass ein in das Innere Fluidkammer hineinragende Fortsatz die Membran oder Membraneinheit in eine Endlage kraftbeaufschlagt, wenn der Verschluss geschlossen wird.

In einer weiteren, besonders bevorzugten Ausgestaltung der Getränkezubereitungsvorrichtung kann vorgesehen sein, dass die Membran auf einem Träger, bevorzugt aus einem Kunststoffmaterial, angeordnet ist, wobei Träger und Membran eine Membraneinheit ausbilden. Dies kann besonders vorteilhaft die Handhabung der Membran und die fluidtechnische Anbindung der Membran erleichtern und verbessern. Die Membraneinheit kann mit dem Träger zusammen so ausgebildet sein, dass im Wesentlichen alle vorangehend im Hinblick auf die Membran offenbarten Eigenschaften auch auf die Membraneinheit zutreffen. Der Träger kann besonders vorteilhaft in einer Längsrichtung, entlang einer Mittelsymmetrieachse der Membran, einen unteren Abschluss sowie einen oberen Abschluss der Membraneinheit ausbilden. Am oberen Abschluss kann der Träger zudem einen Rohrfortsatz aufweisen. Alternativ kann die Ausgestaltung aber auch so ausfallen, dass der Träger einen oberen Abschluss und eine Untere Öffnung aufweist, wobei die Öffnung dann vorteilhaft mit einem Rohrfortsatz eine lösbare Steckverbindung ausbilden kann. Der Rohrfortsatz kann dann beispielsweise fest und nicht lösbar mit dem Schaummodul verbunden sein.

Gemäß einer weiteren, besonders vorteilhaften Ausgestaltung kann vorgesehen sein, dass über einen Rohrfortsatz die trennbare Verbindung zwischen dem Träger und dem Fluidanschluss ausgebildet ist. Der Rohrfortsatz kann sich, wenigstens in einem Endabschnitt, bevorzugt entlang der Längsmittelachse, besonders bevorzugt konzentrisch zur Längsmittelachse der Membran, erstrecken. Dadurch wird erreicht, dass die Membraneinheit mit oder ohne den Rohrfortsatz entnehmbar in der Fluidkammer einsetzbar ist.

In einer weiteren, besonders vorteilhaften Ausführungsform kann vorgesehen sein, dass, insbesondere die Membran, der Träger der Membraneinheit und/oder die Fluidkammer, Abstandshalter auf einer Oberfläche, bevorzugt über die Oberfläche abstehende Rippen, aufweisen, die einen Mindestabstand zwischen der Fluidkammer und dem Träger und/oder der Membran begrenzen. Die Begrenzung des Mindestabstandes zur Fluidkammer betrifft selbstredend den Zustand des Schaummoduls, insbesondere der Fluidkammer und der Membran oder Membraneinheit, bei dem die Membraneinheit in der Fluidkammer aufgenommen oder in die Fluidkammer eingesetzt ist und besonders bevorzugt über einen abnehmbaren Verschluss eines Gehäuses in der Fluidkammer gehalten oder gesichert ist.

Die Abstandshalter des Trägers der Membraneinheit oder der Fluidkammer können verschiedene Vorteile erreichen. Einerseits kann dadurch ein Ausgleich für nicht vermeidbare, fertigungsbedingte Toleranzen geschaffen werden und somit sicherstellen, dass der Spalt oder der Abstand zwischen der Oberfläche der Fluidkammer und der zweiten Membranoberfläche der Membran nicht in ungewollter oder unzulässiger Weise variiert. Mit anderen Worten ausgedrückt bedeutet dies, dass durch die vorteilhaften Abstandshalter auf der Oberfläche des Trägers der Membraneinheit oder der Fluidkammer auch trotz entsprechend fertigungsbedingter Toleranzen ein entsprechender Mindestabstand nicht unterschritten wird, solange sichergestellt ist, dass in der Endlage oder Endposition der Membran oder der Membraneinheit die Abstandshalter an der der Fluidkammer und dem Träger zur Anlage kommen oder anliegen.

Der die Abstandshalter können vorteilhaft einstückig, insbesondere monolithisch, mit einem weiteren Bauteil, beispielsweise der Membran, dem Träger und/oder der Fluidkammer, ausgebildet sein. Beispielsweise kann der Träger samt Abstandshalter als Kunststoff-Spritzgussbauteil ausgebildet sein. Bevorzugt kann die Membraneinheit durch Umspritzen oder Umgießen der Membran mit einem Kunststoffmaterial hergestellt sein.

Gemäß der Erfindung ist vorgesehen, dass die Membran oder die Membraneinheit relativ zur Fluidkammer beweglich, insbesondere entlang einer Längsachse, gelagert ist, wobei in unterschiedlichen Relativpositionen der Membran zur Fluidkammer ein unterschiedlicher Abstand zwischen der zweiten Membranoberfläche der Membran und der Oberfläche der Fluidkammer besteht. Die Verstellung der Membran gegenüber der Fluidkammer entlang einer Längsachse kann vorteilhaft über einen mechanischen Stellmechanismus, beispielsweise ein Verstellrädchen mit einer daran gekoppelten Übertragungsmechanik, bewirkt werden, die auf die Membran und/oder die Fluidkammer wirkt.

Durch die relativ zueinander bewegliche Lagerung von Membran oder Membraneinheit zur Fluidkammer und der entsprechenden Gestaltung der Oberfläche der Membran und der Oberfläche der Fluidkammer kann eine mechanische Möglichkeit geschaffen werden, um den Abstand oder den Spaltabstand zwischen der Membran und der Fluidkammer zu beeinflussen und dadurch die Eigenschaften des aufgeschäumten Fluids zu verändern oder zu steuern.

Gemäß einer weiteren, besonders vorteilhaften Ausgestaltung der Erfindung kann vorgesehen sein, dass die Membran eine konische Form, insbesondere die Form eines Kegelstumpfes, aufweist. Dadurch werden unterschiedliche Vorteile realisiert. Einerseits kann bei der Ausführung der Membran und/oder der in Längsrichtung anschließenden Teile des Trägers in Form eines Konus oder Kegelstumpfes eine besonders vorteilhafte Ausgleichsfunktion an eventuelle fertigungsbedingte Toleranzen erreicht werden, da durch die symmetrische, verjüngende Form des Kegelstumpfes eine Art automatische Zentrierung oder automatische Positionierung in einer Fluidkammer stattfindet, unabhängig davon, ob die Maße der Membran, Membraneinheit und/oder Fluidkammer absolut oder genau den Produktionsvorgaben entsprechen. Außerdem ist eine konusförmige, bevorzugt kegelstumpfförmige, Geometrie der Membran besonders vorteilhaft, um eine möglichst gleichmäßige Strömungsgeschwindigkeit des Fluids, insbesondere der Druckluft, durch die Membran zu erreichen. Mit zunehmendem Querschnitt oder zunehmender Fläche der Membran nimmt auch das dementsprechende Volumen zu.

Gemäß einer weiteren, besonders vorteilhaften Ausgestaltung der Getränkezubereitungsvorrichtung kann vorgesehen sein, dass eine Oberfläche der Fluidkammer in einem Bereich oder in Bereichen, die der Membran gegenüberliegend angeordnet sind, die Form eines Kegelstumpfes aufweist. Dadurch wird in vorteilhafter Weise erreicht, insbesondere bei einer Kombination mit einer entsprechend konusförmigen, insbesondere kegelstumpfförmigen, Membran, dass ein weitestgehend konstanter Spalt zwischen der Membran und der Fluidkammer ausgebildet wird, dessen zunehmender Querschnitt oder Fläche mit zunehmendem Durchmesser des Kegelstumpfes anwächst, sodass in das aufzuschäumende, bevorzugt proteinhaltige, Fluid eine Volumenkompensation für die bereits in Form von kleinen Gasblasen inkorporierte Fluid, beispielsweise Luft, geschaffen wird und es somit zu einer insgesamt gleichmäßigen Strömungsgeschwindigkeit innerhalb der Fluidkammer kommt.

Wie oben bereits beschrieben, kann der Abstand zwischen Membran und Fluidkammer gezielt veränderbar sein, um die entsprechende Fläche oder den Querschnitt des Spaltes gezielt zu verändern.

In einer weiteren, besonders vorteilhaften Variante der Getränkezubereitungsvorrichtung kann vorgesehen sein, dass eine Bypass-Fluidleitung realisiert ist, durch die, bevorzugt gesteuert durch Druckzustände im Inneren der Membran, Fluid vom Fluidanschluss in die Fluidkammer gelangen kann oder umgeleitet wird, ohne dass die Membran von dem Fluid, insbesondere Druckluft, passiert wird. Entsprechend kann die Bypass-Möglichkeit und die dazugehörige Bypass-Fluidleitung beispielsweise von einem Bereich oder einem Abschnitt des Fluidanschlusses ausgebildet werden oder von einem solchen abzweigen. Bevorzugt kann die Bypass-Fluidleitung durch eine Bewegung der Membran und/oder der Membraneinheit, also Membran samt Träger, gegenüber der Fluidkammer und gegenüber dem Fluidanschluss bewirkt werden. Wenn beispielsweise durch Ablagerungen, Verstopfungen oder Verkrustungen die Durchlässigkeit der, bevorzugt porösen, Membran ein gewisses Mindestmaß unterschreitet und von Seiten des Fluidanschlusses ein Fluid, insbesondere Druckluft, mit einem entsprechend hohen Überdruck in die Membran oder in die Membraneinheit eingeleitet wird, kann eine entsprechend große Druckkraft, insbesondere in Längsrichtung weg vom Fluidanschluss der Membran oder Membraneinheit resultieren. In dieser Richtung, in die die Membran oder Membraneinheit elastisch vorgespannt gelagert sein kann, beispielsweise durch ein Federelement, kann ab einem kritischen Druck das entsprechende Vorspannelement einfedern oder zurückgedrängt werden. Durch diese Bewegung der Membran oder Membraneinheit kann dann beispielsweise die Bypass-Fluidleitung über den Fluidanschluss in die Fluidkammer freigegeben werden. Das daraufhin mit entsprechendem Druck in die Fluidkammer einströmendes Fluid, beispielsweise Druckluft, kann zusammen mit etwaigem, in der Fluidkammer befindlichen Fluid auf der zweiten Membranoberfläche der Membran zur Ablösung und Entfernung von Ablagerungen und Verkrustungen beitragen.

Alternativ kann auch vorgesehen sein, dass die Bypass-Fluidleitung gezielt freigegeben werden kann, sodass beispielsweise durch eine direkte händische Betätigung oder eine indirekte Aktivierung des Benutzers durch eine Eingabe an der Getränkezubereitungsvorrichtung die Bypass-Fluidleitung geöffnet und das Fluid aus dem Fluidanschluss in die Fluidkammer und auch auf die zweite Membranoberfläche der Membran geleitet oder umgeleitet werden kann.

Die vorliegende Erfindung wird nachfolgend unter Zuhilfenahme von rein schematischen Ausführungsbeispielen zeigender Zeichnungen beispielhaft erläutert.

Darin zeigen:
- Fig. 1:: ein grundsätzliches Fluidschema einer erfindungsgemäßen Getränkezubereitungsvorrichtung;
- Fig. 2:: ein Schnitt durch ein erfindungsgemäßes **Schaummodul** samt Verbindungsinfrastruktur zur sonstigen Getränkezubereitungsvorrichtung;
- Fig. 3:: eine perspektivische Ansicht einer Membraneinheit samt Membran.

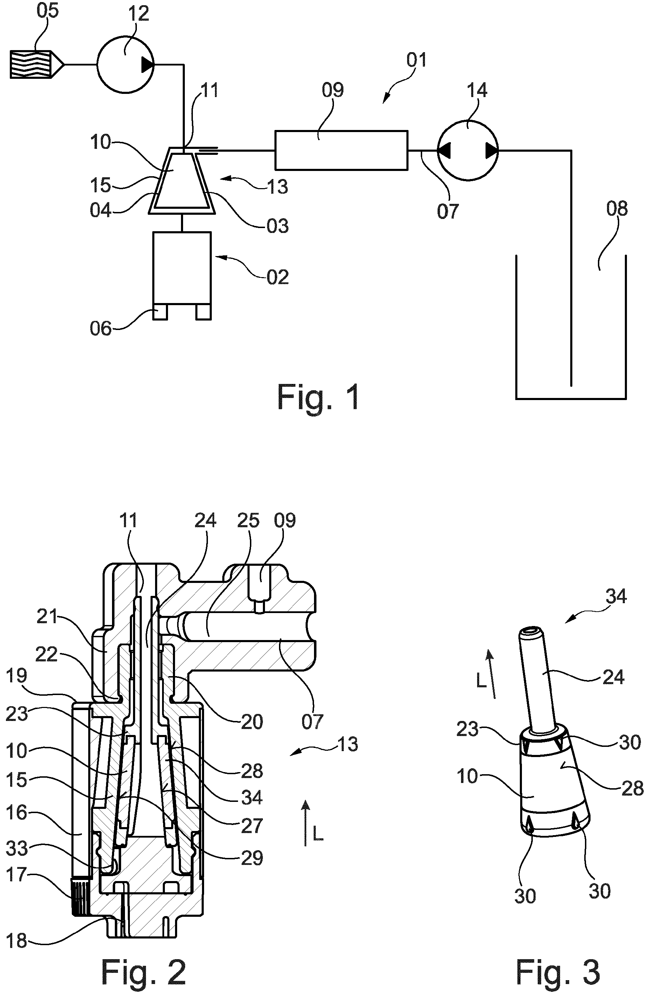

Die Fig. 1 zeigt ein beispielhaftes, grundlegendes Fluidschema einer erfindungsgemäßen Getränkezubereitungsvorrichtung 01. Die Getränkezubereitungsvorrichtung umfasst ein Ausgabemodul 02 mit einem Milch- und/oder Schaumauslauf 06. Der Milch- und/oder Schaumauslauf 06 ist beispielsweise über eine trennbare Fluidzuleitung 07 mit einem Milchbehälter 08 verbunden, wobei in der Fluidzuleitung 07 ein Milcherhitzer 09 vorgesehen sein kann. Der Milcherhitzer kann als Heißwasser- oder Dampfzuleitung realisiert sein und in die Fluidzuleitung münden, um die aus dem Milchbehälter 08 geförderte Milch oder entsprechende andere, bevorzugt proteinhaltige Fluide oder Flüssigkeiten beim Passieren der Zuleitung 07 und vor dem Verlassen durch den Milch- und/oder Schaumauslauf 06 zu erhitzen. Alternativ kann als Milcherhitzer ein Wärmetauscher ausgebildet sein.

Erfindungsgemäß ist dem Milch- und/oder Schaumauslass 06 vorgeschaltet eine Membran 10 angeordnet, die mit einer Fluidkammer 15 in Wirkverbindung steht. Über einen Fluidanschluss 11 kann die Membran 10 mit einem zu Aufschäumzwecken verwendeten Fluid, bevorzugt Druckluft, versorgt werden, wozu beispielsweise eine Luftpumpe 12 ausgebildete Fluidpumpe Luft ansaugt, komprimiert und über eine Leitung dem Fluidanschluss 11 zur Verfügung stellt. Die angesaugte Luft kann dabei zunächst einen Filter 05 passieren. Ausgehend vom Fluidanschluss 11 kann die beispielhafte Druckluft die Membran 10 von einer ersten Membranoberfläche 03 zu einer zweiten Membranoberfläche 04 durchströmen, wobei die zweiten Membranoberfläche 04 so gegenüber, bevorzugt innerhalb, der Fluidkammer 15 angeordnet ist, dass die Druckluft ein in die Fluidkammer 15 gefördertes Fluid, beispielsweise über die Fluidleitung 07 bereitgestellte kalte, warme oder heiße Milch, durchströmt. Die Membran kann, beispielsweise als Sinterkörper aus metallischem Werkstoff, mit einer entsprechend definierten Porosität ausgestattet sein, sodass beim Durchströmen der Druckluft von einer ersten Membranoberfläche 03 der Membran 10 zu einer zweiten Membranoberfläche 04 der Membran an der zweiten Membranoberfläche 04 entsprechend viele kleine Fluidströme erzeugt werden, die dann von dem Fluid, beispielsweise der Milch, in der Fluidkammer abgerissen oder mittransportiert werden und dabei das aus der Membran ausströmende Fluid, beispielsweise Luft, in das die Fluidkammer durchströmende Fluid, beispielsweise Milch, aufnehmen und dieses dadurch aufschäumen.

Da, anders als beispielsweise bei einem Schaummodul mit einer Venturi-Düse oder Strahlpumpe, die Milch nicht selbsttätig über die Zuleitung 07 in das Schaummodul 13 gesaugt wird, umfasst die Getränkezubereitungsvorrichtung der vorliegenden Erfindung in der Fluidzuleitung 07 eine weitere Pumpeinrichtung 14. Die Pumpeinrichtung 14 kann bevorzugt als Rollenpumpe oder Schlauchquetschpumpe ausgebildet sein. Dies hat besondere Vorteile, insbesondere im Hinblick auf die Möglichkeit zur Reinigung der Fluidzuleitung 07, betreffend die gleichmäßige, insbesondere volumenmäßig gleichmäßige, Bereitstellung von Fluid, insbesondere Milch, aus dem Milchbehälter 08 sowie im Hinblick auf die Wartung der Getränkezubereitungsvorrichtung 01 insgesamt.

In der Schnittdarstellung der Fig. 2 ist eine Ausführungsform dargestellt, wie ein Schaummodul 13, welches insgesamt abnehmbar oder entnehmbar an der Getränkezubereitungsvorrichtung 01 angebracht oder vorgesehen sein kann, mit den sonstigen Komponenten oder der sonstigen Infrastruktur der Getränkezubereitungsvorrichtung 01 zusammenwirken kann, und wie im Detail die Funktionsweise des Schaummoduls 13 erreicht wird. In der dargestellten Ausführungsform ist, wie bereits mit dem Fluidschema der Fig. 1 angedeutet, das Schaummodul so aufgebaut, dass eine Fluidkammer 15 die Membran 10 umschließt oder die Membran 10 innenliegend in der Fluidkammer 15 angeordnet ist. Es kann jedoch auch eine umgekehrte Anordnung vorgesehen sein, bei der die Fluidkammer 15 innenliegend gegenüber der Membran angeordnet ist. Auf eine solche Ausgestaltung wird nachfolgend jedoch nicht im Detail eingegangen werden.

Das Schaummodul 13 umfasst eine Fluidkammer 15, die wiederum in einem Gehäuse 16 angeordnet ist. Das Gehäuse 16 wird bodenseitig von einem abnehmbaren Verschluss 17 verschlossen, der gleichzeitig auch den Auslauf 18 oder Austritt des Schaummoduls 13 zur Ausgabe eines durch die Fluidkammer 15 geströmten Fluids ermöglicht. Alternativ zu einer Ausgestaltung mit einem abnehmbaren Verschluss 17 kann beispielsweise auch eine nicht entnehmbare Ausgestaltung der Membran 10 innerhalb des Gehäuses 16 vorgesehen sein. Dann kann beispielsweise nach einer gewissen Betriebszeit ein Austausch der Fluidkammer 15 mit samt der Membran erfolgen. So kann sichergestellt werden, dass die Funktionsweise der Membran 10 und die Hygiene innerhalb der Fluidkamme 15 aufrecht erhalten bleibt.

Der Auslauf steht somit in Fluidkommunikation mit einem Fluidausgang 33 der Fluidkammer 15. Die Fluidkammer 15 bildet an einem oberen Ende einen Anschlag-Flansch 19 aus, der als Anschlag für das Gehäuse 16 dient. In Längsrichtung L des Schaummoduls 13 ist oberhalb des Anschlag-Flansches 19 ein Koppelstutzen 20 vorgesehen, der, bevorzugt werkzeuglos, insbesondere über eine Steckbewegung, mit einer Koppelstelle 21 gekoppelt werden kann. Die Koppelstelle 21 umfasst einen entsprechenden Aufnahmering mit Hakenmitteln 22 zur Befestigung und Sicherung des Koppelstutzens 20 und damit des Schaummoduls 13 an der Getränkezubereitungsvorrichtung. Konzentrisch innenliegend in der Fluidkammer 15 ist eine Membraneinheit 34 aufgenommen. Die Membraneinheit 34 umfasst im Wesentlichen einen Träger 23, bevorzugt aus Kunststoffmaterial, und die Membran 10, beispielsweise als metallischen Sinterkörper.

Der Träger 23 umfasst einen Rohrfortsatz 24, der sich konzentrisch durch den Stutzen 20 erstreckt und in einem Fluidanschluss 11 mündet. Die Verbindung zwischen der Membran 10 oder der Membraneinheit 22 und dem Fluidanschluss 11 kann ebenfalls als Steckverbindung ausgebildet sein und durch eine Steckbewegung werkzeuglos hergestellt und gelöst werden. Alternativ kann ein fest mit dem Schaummodul verbundener Rohrfortsatz vorgesehen sein der mit einem Endabschnitt in eine Öffnung, bevorzugt eine bodenseitige Öffnung, des Trägers gesteckt werden kann. Wie in der Fig. 2 dargestellt, ist der Übergang zwischen der Fluidkammer 15 und dem Fluideinlass 25, der von der Dampfzuleitung des Milcherhitzers 09 und der Milchzuleitung 07 gespeist wird, über die Abwinklung vor Erreichen der Koppelstelle 21 so ausgebildet, dass sowohl die Verbindung zwischen Fluidkammer 15 und Fluideinlass 25, insbesondere über die Koppelstelle 21, als auch die Verbindung zwischen Fluidanschluss 11 und Membran 10 oder Membraneinheit 34 durch eine entsprechend gleichgerichtete Bewegung, insbesondere Steckbewegung, nämlich in Längsrichtung L, getrennt und hergestellt werden kann. Es ist auch vorteilhaft möglich den Fluidanschluss 11 auf einer in Längsrichtung L gegenüberliegenden Seite der Membraneinheit 34 auszubilden.

Das an dem Fluidanschluss 11 bereitgestellte Fluid, beispielsweise Druckluft, strömt durch den Rohrfortsatz 24 in das Innere der Membraneinheit 34 und passiert, aufgrund des verschlossenen Bodens des Trägers 23 die Membran 10 von einer Innenoberfläche 27 zu einer Außenoberfläche 28. An der Außenoberfläche 28 kommt das Fluid, insbesondere die Druckluft, mit dem in der Fluidkammer befindlichen Fluid in Kontakt, wobei die an der Außenoberfläche 28 der Membran austretenden Fluidströme in Form von kleinen Blasen, insbesondere Gasblasen, in das Fluid der Fluidkammer 15 inkorporiert und mitgerissen werden. In der Schnittdarstellung der Fig. 2 ist bereits erkennbar, dass die Membran kegelstumpfförmig geformt ist und dass auch die Fluidkammer, insbesondere die Innenoberfläche 29 der Fluidkammer 15, in Bereichen, in denen sie der Außenoberfläche 28 der Membran gegenüberliegt, ebenfalls eine entsprechende kegelstumpfförmige Kontur ausbildet. Es können vorteilhaft aber auch andere Formen/Geometrien für die Membran und/oder die Fluidkammer 15 gewählt werden. Vorteilhaft sind konische Formen.

Durch ein Entfernen des abnehmbaren Verschlusses 17 kann einerseits das Gehäuse 16 von der Fluidkammer 15 gelöst werden und ebenfalls die Membran 10 oder die Membraneinheit 34 aus der Fluidkammer entnommen werden. Dies kann beispielsweise dann vorteilhaft durchgeführt werden, wenn zunächst das Schaummodul 13 als Ganzes von dem Fluidanschluss 11 und dem Fluideinlass 25, insbesondere der Koppelstelle 21, abgetrennt wurde.

In der Fig. 3 ist nochmals die Membraneinheit 34 umfassend die Membran 10 und den Träger 23 dargestellt. Es ist erkennbar, dass der Träger in Längsrichtung L oberhalb und unterhalb der Membran 10 auf der Außenoberfläche des Trägers 23 angrenzend an die Außenoberfläche 28 der Membran 10 Abstandshalter 30, in Form von überstehenden Rippen, aufweist, die einen Mindestabstand im Inneren der Fluidkammer ermöglichen. Alternativ oder zusätzlich zu den Abstandshaltern 30 können auch Abstandshalter auf der Innenoberfläche 29 der Fluidkammer 15 vorgesehen sein. Ebenfalls können alternativ oder entsprechende Abstandshalter durch die Membran selbst ausgebildet werden. Die Wirkung der Abstandshalter ist dabei identisch.

In der Darstellung der Fig. 3 ist die Membraneinheit 34 in einem aus der Fluidkammer entnommen Zustand dargestellt, der bevorzugt hergestellt werden kann, nachdem das Schaummodul von der Getränkezubereitungsvorrichtung, beispielsweise durch eine Bewegung in Längsrichtung L, abgezogen wurde und der abnehmbare Verschluss geöffnet, beispielsweise aufgeschraubt, wurde. Durch den Rohrfortsatz 24 kann die Entnahme erleichtert werden, indem von hinten auf den Rohrfortsatz 24 eine Druckkraft aufgebracht wird und beispielsweise über das Gehäuse 16 oder über den Anschlag-Flansch 19 ein Widerlager ausgebildet wird, sodass die Membraneinheit 22 unten aus dem Gehäuse 16 und/oder der Fluidkammer herausgedrückt werden kann.

### Bezugszeichenliste

- 01: Getränkezubereitungsvorrichtung
- 02: Getränkeausgabemodul
- 03: erste Membranoberfläche
- 04: zweite Membranoberfläche
- 05: Filter
- 06: Milch- oder Schaumauslauf
- 07: Fluidzuleitung
- 08: Milchbehälter
- 09: Milcherhitzer
- 10: Membran
- 11: Fluidanschluss
- 12: Luftpumpe
- 13: Schaummodul
- 14: Pumpeinrichtung
- 15: Fluidkammer
- 16: Gehäuse
- 17: Verschluss
- 18: Auslauf
- 19: Anschlag-Flansch
- 20: Koppelstutzen
- 21: Koppelstelle
- 22: Hakenmittel
- 23: Träger
- 24: Rohrfortsatz
- 25: Fluideinlass
- 27: Innenoberfläche
- 28: Außenoberfläche
- 29: Oberfläche der Fluidkammer
- 30: Abstandshalter
- 33: Fluidauslass
- 34: Membraneinheit

- L: Längsrichtung

## Patentansprüche

1. Getränkezubereitungsvorrichtung (01), insbesondere ein Kaffeevollautomat, mit einem Schaummodul (13), wobei das Schaummodul (13) eine, bevorzugt poröse, Membran (10) aufweist, wobei der Membran (10) ein Fluidanschluss (11), der eine Verbindung zu einer Fluidpumpe, bevorzugt einer Luftpumpe (12), herstellt, so wirkverbunden zugeordnet ist, dass ein Fluid, insbesondere Druckluft, die Membran (10) von einer ersten Membranoberfläche (03) zu einer zweiten Membranoberfläche (04) passieren kann, wobei die Membran (10) in einer Fluidkammer (15) des Schaummoduls (13) angeordnet ist, die einen Fluideinlass (25) uns einen Fluidauslass (33) aufweist, wobei der Fluideinlass (25) und der Fluidauslass (33) so zu der Membran (10) angeordnet sind, dass ein durch die Fluidkammer (15) strömendes Fluid eine zweite Membranoberfläche (04) der Membran (10) passiert, wobei der Fluideinlass (25) mit einer Fluidkoppelstelle (21) der Getränkezubereitungsvorrichtung (01) verbindbar ist und wobei die Fluidkoppelstelle (21) mit wenigstens einer Fluidzuleitung (07), bevorzugt zwei unabhängigen Fluidzuleitungen (07), verbunden ist, **dadurch gekennzeichnet,**
**dass** die Membran (10) oder die Membraneinheit (34) relativ zur Fluidkammer (15) beweglich, insbesondere entlang einer Längsachse (L), gelagert ist, wobei in unterschiedlichen Relativpositionen ein unterschiedlicher Abstand zwischen der Außenoberfläche (28) der Membran (10) und einer Oberfläche (29) der Fluidkammer (15) besteht.

2. Getränkezubereitungsvorrichtung nach Anspruch 1,
**dadurch gekennzeichnet,**
**dass** die Membran (10), insbesondere über eine Steckverbindung, werkzeuglos mit dem Fluidanschluss (11) trennbar und verbindbar ausgebildet ist.

3. Getränkezubereitungsvorrichtung nach Anspruch 1 oder 2,
**dadurch gekennzeichnet,**
**dass** die Fluidkammer (15), insbesondere über eine Steckverbindung, werkzeuglos mit der Fluidkoppelstelle (21) der Getränkezubereitungsvorrichtung (01) trennbar und verbindbar ausgebildet ist.

4. Getränkezubereitungsvorrichtung nach einem der vorhergehenden Ansprüche,
**dadurch gekennzeichnet,**
**dass** die Fluidkammer (15) in einem mit einem abnehmbaren Verschluss (17) versehenen Gehäuse (16) angeordnet ist, wobei das Gehäuse (16) und die Fluidkammer (15) so ausgebildet sind, dass bei abgenommenem Verschluss (17) die Membran (10) aus der Fluidkammer (15) und dem Gehäuse (16), bevorzugt werkzeuglos, entnehmbar ist.

5. Getränkezubereitungsvorrichtung nach einem der vorhergehenden Ansprüche,
**dadurch gekennzeichnet,**
**dass** die Membran (10) auf einem Träger (23), bevorzugt aus einem Kunststoffmaterial, angeordnet ist, wobei Träger (23) und Membran (10) eine Membraneinheit (34) ausbilden.

6. Getränkezubereitungsvorrichtung nach Anspruch 5, **dadurch gekennzeichnet,**
**dass** über einen Rohrfortsatz (24) die trennbare Verbindung zwischen dem Träger und dem Fluidanschluss (11) ausgebildet ist.

7. Getränkezubereitungsvorrichtung nach einem der vorangehenden Ansprüche,
**dadurch gekennzeichnet,**
**dass**, insbesondere die Membran, ein Träger (23) und/oder die Fluidkammer, Abstandshalter (30) auf einer Oberfläche aufweisen, die einen Mindestabstand zwischen der Fluidkammer und dem Träger (23) und/oder der Membran (10) begrenzen.

8. Getränkezubereitungsvorrichtung nach einem der vorhergehenden Ansprüche,
**dadurch gekennzeichnet,**
**dass** die Membran (10) eine konische Form, bevorzugt die Form eines Kegelstumpfes, aufweist.

9. Getränkezubereitungsvorrichtung nach einem der vorhergehenden Ansprüche,
**dadurch gekennzeichnet,**
**dass** eine Oberfläche (29) der Fluidkammer (15) in Bereichen, die der Membran (10) gegenüberliegend angeordnet sind die Form eines Konus, bevorzugt eines Kegelstumpfes, aufweist.

10. Getränkezubereitungsvorrichtung nach einem der vorangehenden Ansprüche,
**gekennzeichnet durch** eine Bypass-Fluidleitung, durch die, bevorzugt gesteuert durch Druckzustände im Inneren der Membran (10), Fluid vom Fluidanschluss (11) in die Fluidkammer (15) gelangen kann, ohne die Membran (10) zu passieren.

## Claims

1. A beverage preparation device (01), in particular a fully automatic coffee machine, having a frothing module (13), the frothing module (13) having a, preferably porous, membrane (10), a liquids connection (11), which establishes a connection to a liquids pump (12), preferably an air pump (12), being assigned to the membrane (10) in such an operatively connected manner that a fluid, in particular compressed air, passes from a first membrane surface (03) to a second membrane surface (04), the membrane (10) being disposed in a liquids chamber (15) of the frothing module (13), which has a liquids inlet (25) and a liquids outlet (33), the liquids inlet (25) and the liquids outlet (33) being disposed such in relation to the membrane (10) that a liquid flowing through the liquids chamber (15) passes a second membrane surface (04) of the membrane (10), the liquids inlet (25) being connectable to a liquids joint (21) of the beverage preparation device (01) and the liquids joint (21) being connected to at least one liquids supply (07), preferably two independent liquids supplies (07),
**characterized in that**
the membrane (10) or the membrane unit (34) is movably mounted in relation to the liquids chamber (15), in particular along a longitudinal axis (L), the size of gaps between the outer surface (28) of the membrane (10) and a surface (29) of the liquids chamber (15) differing in different relative positions.

2. The beverage preparation device according to claim 1,
**characterized in that**
the membrane (10), is connectable to and disconnectable from the liquids connection (11) without the use of tools, in particular via a plug connection.

3. The beverage preparation device according to claim 1 or 2,
**characterized in that**
the liquids chamber (15) is connectable to and disconnectable from the liquids joint (21) of the beverage preparation device (01) without the use of tools, in particular via a plug connection.

4. The beverage preparation device according to any one of the preceding claims,
**characterized in that**
the liquids chamber (15) is disposed in a casing (16) provided with a removable fastener (17), the casing (16) and the liquids chamber (15) being designed in such a manner that the membrane (10) is removable from the liquids chamber (15) and the casing (16), preferably without the use of tools, when the fastener is removed (17).

5. The beverage preparation device according to the any one of the preceding claims,
**characterized in that**
the membrane (10) is disposed on a carrier (23), preferably made of a plastic material, the carrier (23) and the membrane (10) forming a membrane unit (34).

6. The beverage preparation device according to claim 5,
**characterized in that**
the disconnectable connection is formed between the carrier and the liquids connection (11) via a tube appendage (24).

7. The beverage preparation device according to any one of the preceding claims,
**characterized in that**
in particular the membrane, a carrier (23) and/or the liquids chamber has/have spacers (30) on a surface which limit a minimum space between the liquids chamber and the carrier (23) and/or the membrane (10).

8. The beverage preparation device according to any one of the preceding claims,
**characterized in that**
the membrane (10) has a conic shape, preferably the shape of a frustum.

9. The beverage preparation device according to any one of the preceding claims,
**characterized in that**
areas of a surface (29) of the liquids chamber (15), which are disposed opposite the membrane (10), have the shape of a cone, preferably of a frustum.

10. The beverage preparation device according to any one of the preceding claims,
**characterized by**
a bypass liquids tube, through which liquids enter the liquids chamber (15) from the liquids connection (11), preferably controlled by pressure conditions in the interior of the membrane (10), without passing the membrane (10).

## Revendications

1. Dispositif à préparer de boissons (01), notamment une machine à café grain, ayant un module de mousseur (13), le module de mousseur (13) ayant une membrane (10), de préférence poreuse, une connexion de fluide (11), qui établit une connexion à une pompe à fluide (12), de préférence une pompe à air (12), étant associée à la membrane (10) dans une manière raccordée fonctionnellement qu'un fluide, notamment l'air comprimé, passe à partir d'une première surface de membrane (03) à une deuxième surface de membrane (04), la membrane (10) étant disposée dans une chambre de fluide (15) du module de mousseur (13), qui a une entrée de fluide (25) et une sortie de fluide (33), l'entrée de fluide (25) et la sortie de fluide (33) étant disposées par rapport à la membrane (10) de telle manière qu'un fluide écoulant par la chambre de fluide (15) passe à travers une deuxième surface (04) de la membrane (10), l'entrée de fluide (25) étant connectable à une jointure de fluide (21) du dispositif à préparer de boissons (01) et la jointure de fluide (21) étant reliée à au moins une amenée de fluide (07), de préférence deux amenées de fluide (07) indépendants,
**caractérisé en ce que**
la membrane (10) ou l'unité de membrane (34) est montée de manière mobile par rapport à la chambre de fluide (15), notamment le long d'un axe (L) longitudinal, une largeur des espaces entre la surface extérieure (28) de la membrane (10) et une surface (29) de la chambre de fluide (15) se différant dans des positions relatives différentes.

2. Dispositif à préparer de boissons selon la revendication 1,
**caractérisé en ce que**
la membrane (10) est connectable à et est déconnectable de la connexion de fluide (11) sans aucun outillage, notamment par l'intermédiaire d'une connexion enfichable.

3. Dispositif à préparer de boissons selon la revendication 1 ou la revendication 2,
**caractérisé en ce que**
la chambre de fluide (15) est connectable à et déconnectable de la jointure de fluide (21) du dispositif à préparer de boissons (01) sans aucun outillage, notamment par l'intermédiaire d'une connexion enfichable.

4. Dispositif à préparer de boissons selon l'une quelconque des revendications précédentes,
**caractérisé en ce que**
la chambre de fluide (15) est disposée dans un boîtier (16) pourvu d'une fermeture (17) détachable, le boîtier (16) et la chambre de fluide (15) étant conçus de telle manière que la membrane (10) peut être enlevée de la chambre de fluide (15) et du boîtier (16), de préférence sans aucun outillage, quand on détache la fermeture (17).

5. Dispositif à préparer de boissons selon l'une quelconque des revendications précédentes,
**caractérisé en ce que**
la membrane (10) est disposée sur un porteur (23), de préférence fait en matériau plastique, le porteur (23) et la membrane (10) formant une unité de membrane (34).

6. Dispositif à préparer de boissons selon la revendication 5,
**caractérisé en ce que**
la connexion détachable est formée entre le porteur et la connexion de fluide (11) par l'intermédiaire d'un prolongement de tuyau (24).

7. Dispositif à préparer de boissons selon l'une quelconque des revendications précédentes,
**caractérisé en ce que**
notamment la membrane, un porteur (23) et/ou la chambre de fluide a/ont des entretoises (30) sur une surface qui limite un espace minimum entre la chambre de fluide et le porteur (23) et/ou la membrane (10).

8. Dispositif à préparer de boissons selon l'une quelconque des revendications précédentes,
**caractérisé en ce que**
la membrane (10) a une forme conique, de préférence la forme d'un tronc de cône.

9. Dispositif à préparer de boissons selon l'une quelconque des revendications précédentes,
**caractérisé en ce que**
des parties d'une surface (29) de la chambre de fluide (15), qui sont disposées vis-à-vis de la membrane (10), ont la forme d'un cône, de préférence d'un tronc de cône.

10. Dispositif à préparer de boissons selon l'une quelconque des revendications précédentes,
**caractérisé par**
un tuyau de fluide formant dérivation, par lequel du fluide entre la chambre de fluide (15) à partir de la connexion de fluide (11), de préférence de manière contrôlée par des conditions de pression dans l'intérieur de la membrane (10), sans passant la membrane (10).
